# EUROPÄISCHE PATENTANMELDUNG

(11) **EP 4 568 020 A1**
(43) Veröffentlichungstag der Anmeldung: **11.06.2025**
(21) Anmeldenummer: 24213863.4
(22) Anmeldetag: 19.11.2024
(51) Int. Cl.: H01R 4/48, H01R 39/02, H01R 13/11

(54) **STECKERVORRICHTUNG UND ENTSPRECHENDES HERSTELLUNGSVERFAHREN**

(30) Priorität: 08.12.2023 DE 102023212395
(71) Anmelder: Robert Bosch GmbH, 70442 Stuttgart (DE)
(72) Erfinder: Szabo, Daniel, 1103 Budapest (HU); Ackumari, Munivel, 1103 Budapest (HU); Farkas, Viktor Milan, 1103 Budapest (HU); Szakacs, Laszlo, 9700 Szombathely (HU)

(57) **Zusammenfassung**

Die vorliegende Erfindung betrifft eine Steckervorrichtung (1) zum elektrischen Verbinden einer ersten Leitung (11) und einer zweiten Leitung. Die - Steckervorrichtung (1) umfasst einen Grundkörper (3); und eine auf dem Grundkörper (3) angeordnete Kontaktzunge (4) mit einer zum elektrischen Verbinden mit der zweiten Leitung. Die Kontaktzunge (4) ist ausgebildet, einen mit der ersten Leitung (11) verbundenen Steckerpin (10) einzuklemmen, um eine mechanische und elektrische Verbindung zwischen Kontaktzunge (4) und Steckerpin (10) herzustellen.

## Beschreibung

### Stand der Technik

Die vorliegende Erfindung betrifft eine Steckervorrichtung, ein Verfahren zum Herstellen einer Steckervorrichtung. Ferner betrifft die Erfindung eine Fahrzeugbaugruppe.

Steckverbindungen sind aus der Leistungselektronik in unterschiedlichen Ausgestaltungen bekannt. Dabei werden üblicherweise Steckkontaktsysteme mit Federkontakten oder mit Schraubverbindungen verwendet. Hierbei ist insbesondere an Schraubverbindungen nachteilig, dass hier eine Zugänglichkeit für ein Schraubwerkzeug notwendig ist.

Die Druckschrift DE 10 2017 218 326 A1 beschreibt ein Beispiel einer Hochstrom-Steckverbindung zur Herstellung einer elektrischen Verbindung zwischen einem Inverter und einer elektrischen Maschine oder einem elektrischen Energiespeicher in einem Fahrzeug. Ein Federelement übt eine axiale Vorspannung aus.

Ferner sind im Stand der Technik Hochspannungs-Stecker bekannt, bei denen beschichtete Leiterschienen in einen Kunststoffkörper eingegossen sind, der üblicherweise Buchsen zum Festschrauben und eine Nut zum Abdichten aufweist. Um den Stecker festzuschrauben müssen Öffnungen am Gehäuse vorgesehen werden, welche aufgrund von Sicherheitsanforderungen bei Hochspannungsanschlüssen versiegelt werden müssen. Ferner kann es notwendig sein, eine aktive Verriegelung (Interlock) vorzusehen, um die Sicherheit zu gewährleisten.

### Offenbarung der Erfindung

Mit der vorliegenden Erfindung lässt sich auf einfache Weise eine sichere Steckverbindung herstellen, die keine Verschraubung und kein Interlock benötigt.

Erfindungsgemäß ist daher eine Steckervorrichtung zum elektrischen Verbinden einer ersten Leitung und einer zweiten Leitung mit den Merkmalen des Patentanspruchs 1 sowie ein Verfahren zum Herstellen einer Steckervorrichtung mit den Merkmalen des Patentanspruchs 5 vorgesehen. Ferner werden eine Fahrzeugbaugruppe nach Anspruch 9 und ein Fahrzeug nach Anspruch 10 bereitgestellt.

Vorteilhafte Ausgestaltungen und Weiterbildungen ergeben sich aus den weiteren Unteransprüchen sowie aus der Beschreibung unter Bezugnahme auf die Figuren.

Die Steckervorrichtung dient zum elektrischen Verbinden einer ersten Leitung und einer zweiten Leitung. Die erste Leitung kann beispielsweise mit einem Inverter, insbesondere mit einer Leiterschiene (Busbar) des Inverters verbunden sein. Besonders vorzugsweise kann die Leiterschiene die erste Leitung sein. Die zweite Leitung kann beispielweise mit einem Elektromotor, insbesondere mit einer Statorwicklung des Elektromotors verbunden sein. Besonders vorzugsweise kann die Statorwicklung die zweite Leitung sein.

Die erfindungsgemäße Steckervorrichtung kann insbesondere eine Hochspannungs-Steckervorrichtung sein, die zum Verbinden elektrischer Leitungen verwendet werden, die mit einer Hochspannung, beaufschlagt sind. Als Hochspannung wird üblicherweise eine Spannung ab 1000 V bezeichnet. Eine Niederspannung ist dementsprechend eine Spannung kleiner als 1000 V. Im Automobilbereich kann jedoch auch schon eine Spannung größer als 12 V, größer als 48 V bzw. größer als 100 V als "Hochspannung" bezeichnet werden. Entsprechend kann es ausreichend sein, wenn die erfindungsgemäße Hochspannungs-Steckervorrichtung für Spannungen größer als 12 V, größer als 48 V, größer als 100 V oder größer als einige hundert Volt ausgelegt ist.

In bevorzugten Ausführungen können mehrere erste Leitungen mit entsprechend mehreren zweiten Leitungen, vorzugsweise paarweise verbunden werden.

Die Steckervorrichtung umfasst einen Grundkörper der als tragendes Bauteil zum mechanischen Befestigen der weiteren Komponenten dient. Der Grundkörper eine Vielzahl von Löchern bzw. Bohrungen aufweisen, um z.B. Leitungen oder Anschlüsse durchzuführen. Ferner kann am Grundkörper eine Vielzahl von Erhebungen oder Pins als Vorsprünge zum Heißprägen (hier auch als Stanznasen bezeichnet) ausgebildet sein, um daran weitere Bauteile bzw. Komponenten, insbesondere Kontaktzungen zu befestigen, besonders vorzugweise mittels einem Heißprägeverfahren.

Gemäß einer bevorzugten Ausführung kann der Grundkörper mittels einem Spritzgussverfahren aus Kunststoff hergestellt werden. Somit kann der Grundkörper in großer Stückzahl und mit geringen Kosten bei gleichbleibender Qualität hergestellt werden.

Auf dem Grundkörper ist eine Kontaktzunge zum elektrischen Verbinden mit der zweiten Leitung angeordnet. Die Kontaktzunge ist aus einem elektrisch leitfähigen Material, wie zum Beispiel Kupfer oder einer Kupferlegierung hergestellt. Kupfer kombiniert gute Leitfähigkeit mit Korrosionsbeständigkeit und lässt sich einfach verarbeiten.

Die Kontaktzunge weist vorzugsweise eine Vielzahl von Löchern auf, die zum mechanischen Befestigen der Kontaktzunge mit dem Grundkörper dienen. Gemäß einer bevorzugten Ausführung kann die Kontaktzunge mittels einem Heißprägeverfahren am Grundkörper befestigt werden. Hierdurch kann eine stabile und dauerhafte Verbindung zwischen Kontaktzunge und Grundkörper hergestellt werden.

Die Kontaktzunge ist ausgebildet, einen mit der ersten Leitung verbundenen Steckerpin einzuklemmen, um eine mechanische und elektrische Verbindung zwischen Kontaktzunge und Steckerpin herzustellen. Eine solche Klemmverbindung hat den erreichbaren Vorteil, dass mechanische Toleranzen, insbesondere Schwankungen in der relativen Position zwischen den zu verbindenden Bauteilen kompensiert werden können.

Gemäß einer besonders bevorzugten Ausgestaltung wird die erste Leitung alleine durch die Kontaktzunge eingeklemmt, ohne dass hierfür weiter Bauteile nötig sind. Insbesondere sind keine zusätzlichen Federelemente oder sonstige Halterungen nötig. Somit kann ein besonders einfacher und kostengünstiger Aufbau der Steckervorrichtung erreicht werden.

Ein bevorzugter Steckerpin kann als flache längliche Leiterschiene ausgebildet sein. Der Steckerpin selbst kann mit der ersten Leitung verbunden sein oder selbst die Aufgabe der ersten Leitung übernehmen. In einer bevorzugten Ausführung kann am Steckerpin eine Dichteinrichtung angeordnet sein, um das Innere eines Gehäuses abzudichten, das ein(e) mit der Steckervorrichtung versehenes Bauteil oder Baugruppe umgibt.

Um die Klemmwirkung zu verbessern, bzw. um ein Herausziehen von Steckerpins zu vermeiden, können die Kontaktzungen Wiederhaken aufweisen, welche ein Einführen eines Steckerpins ermöglichen aber ein Herausziehen erschweren. Solche Wiederhaken können insbesondere paarweise gegenüberliegend an paarweise gegenüberliegenden Kontaktzungen ausgebildet sein.

Gemäß einer bevorzugten Weiterbildung kann die Kontaktzunge ein einstückig gestanztes Metallblech sein, das einen gebogenen ersten Schenkel aufweist. Eine solche Kontaktzunge lässt sich besonders einfach und kostengünstig in großen Stückzahlen herstellen. Metall hat zudem die vorteilhafte Eigenschaft, dass eine Klemmwirkung besonders einfach zu erreichen ist, indem eine Federeigenschaft des ersten Schenkels ausgenutzt wird. Insbesondere kann die Kontaktzunge einen im Wesentlichen ebenen Abschnitt aufweisen, der als Leiterschiene dient und am Grundkörper befestigt werden kann. Hierzu können im ebenen Abschnitt mehrere Löcher bzw. Ösen ausgebildet sein. Ferner kann der im Wesentlichen ebene Abschnitt beim Stanzen ein Formprofil aufweisen, welches eine mechanische Stabilität der Kontaktzunge erhöhen kann.

In einer bevorzugten Ausführung kann auf dem Grundkörper bzw. an der Kontaktzunge ein Federelement angeordnet sein, das mit der Kontaktzunge zusammenwirkt, um eine Klemmwirkung der Kontaktzunge zum Einklemmen des Steckerpins zu verstärken. Beispielsweise kann das Federelement einen gebogenen Schenkel aufweise, der im Wesentlichen parallel zum ersten Schenkel verläuft, um eine Federkonstante des ersten Schenkels zu erhöhen. Folglich kann eine höhere Klemmkraft zum Festhalten eines Steckerpins erzielt werden.

Das Federelement kann vorzugsweise ein einstückig gestanztes Metallblech sein, das einen gebogenen zweiten Schenkel aufweist. Insbesondere kann der erste Schenkel der Kontaktzunge dem zweiten Schenkel des Federelements gegenüberliegen, um den Steckerpin dazwischen einzuklemmen. Somit kann auf einfache Weise ein Klemmverbindung zwischen Kontaktzunge und Steckerpin hergestellt werden, insbesondere indem der Steckerpin einfach zwischen ersten und zweiten Schenkel gesteckt wird.

Gemäß einer bevorzugten Weiterbildung kann die Kontaktzunge eine Öffnung zum Durchführen des Steckerpins aufweisen. Ferner kann die Kontaktzunge auf zwei einander gegenüberliegenden Seiten der Öffnung jeweils gebogene Schenkel zum Einklemmen des Steckerpins aufweisen. Diese beiden gebogenen Schenkel können insbesondere die zuvor beschriebenen ersten und zweiten Schenkel ersetzen. Eine derart ausgebildete Kontaktzunge kann in vorteilhafter Weise ohne zusätzliches Federelement eine ausreichende Klemmwirkung auf einen Steckerpin ausüben. Somit kann auf ein weiteres Bauteil verzichtet werden, so dass der Aufbau der bevorzugten Steckervorrichtung weniger komplex ist und damit auch Kosten sparen kann.

Der Inverter kann vorzugsweise ein Dreiphasen-Wechselrichter oder Dreiphasen-Frequenzumrichter sein. Besonders vorzugsweise kann der Inverter über drei Steckerpins mit einem Elektromotor, insbesondere mit den Statorwicklungen des Elektromotors in einem Elektrofahrzeug verbunden werden. Hierzu dient vorzugsweise die erfindungsgemäße Steckervorrichtung.

Nach einer bevorzugten Ausführungsform der Erfindung sind drei oder mehr Kontaktzungen auf dem Grundkörper angeordnet. Insbesondere kann somit ein Inverter mit drei Ausgängen über drei Steckerpins mit den drei Kontaktzungen der Steckervorrichtung verbunden werden. Die drei Kontaktzungen können somit in vorteilhafter Weise mit drei Phasenanschlüssen eines Stators eines Wechselstrommotors verbunden werden. Mit anderen Worten kann die Steckervorrichtung dem Elektromotor einen dreiphasigen Drehstrom zur Verfügung stellen.

Ein Verfahren zum Fertigen einer Steckervorrichtung umfasst einen ersten Schritt zum Bereitstellen eines Grundkörpers. Dieser Schritt kann ein Spritzgussverfahren zum Herstellen des Grundkörpers aus einem Kunststoff aufweisen. Hierbei wird bevorzugt ein elektrisch isolierendes Material verwendet.

In einem weiteren Schritt wird eine Kontaktzunge durch Stanzen und Prägen eines einstückigen Metallblechs und Biegen eines Abschnitts des Metallblechs zu einem ersten Schenkel gefertigt. Anschließend kann die Kontaktzunge auf dem Grundkörper angeordnet werden und durch ein Heißprägeverfahren am Grundkörper befestigt werden. So kann auf einfache und kostengünstige Weise eine feste und dauerhafte Verbindung zwischen Kontaktzunge und Grundkörper hergestellt werden.

In einem bevorzugten Verfahren kann ferner ein oben beschriebenes Federelement durch Stanzen und Prägen eines einstückigen Metallblechs und Biegen eines Abschnitts des Metallblechs zu einem zweiten Schenkel gefertigt werden. Das Federelement kann auf der Kontaktzunge angeordnet werden und vorzugsweise durch ein Heißprägeverfahren am Grundkörper befestigt werden.

Eine erfindungsgemäße Fahrzeugbaugruppe umfasst eine erfindungsgemäße Steckervorrichtung zum Herstellen einer Steckverbindung zwischen einem Inverter, der mit der ersten Leitung elektrisch verbunden ist und einem Elektromotor, der mit der zweiten Leitung elektrisch verbunden ist.

Die vorliegende Erfindung wird nachfolgend anhand der in den schematischen Figuren angegebenen Ausführungsbeispiele näher erläutert. Es zeigen dabei:
- Fig. 1: eine Schnittansicht durch eine Steckervorrichtung in einem Elektrofahrzeug gemäß dem Stand der Technik;
- Fig. 2: eine Schnittansicht durch eine Steckervorrichtung in einem Elektrofahrzeug gemäß einem ersten Ausführungsbeispiel;
- Fig. 3: eine Schnittansicht durch eine Steckervorrichtung in einem Elektrofahrzeug gemäß einem zweiten Ausführungsbeispiel;
- Fig. 4: eine schematische Darstellung der Steckervorrichtung gemäß dem ersten Ausführungsbeispiel;
- Fig. 5: eine schematische Darstellung der Steckervorrichtung gemäß dem zweiten Ausführungsbeispiel;
- Fig. 6: illustriert ein Verfahren zum Herstellen der Steckervorrichtung gemäß dem ersten Ausführungsbeispiel;
- Fig. 7: illustriert ein Verfahren zum Herstellen der Steckervorrichtung gemäß dem zweiten Ausführungsbeispiel;
- Fig. 8: illustriert ein Verfahren zum Verbinden eines Inverters mit einem Elektromotor unter Verwendung der Steckervorrichtung gemäß dem ersten Ausführungsbeispiel; und
- Fig. 9: illustriert ein Verfahren zum Verbinden eines Inverters mit einem Elektromotor unter Verwendung der Steckervorrichtung gemäß dem zweiten Ausführungsbeispiel.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten

Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

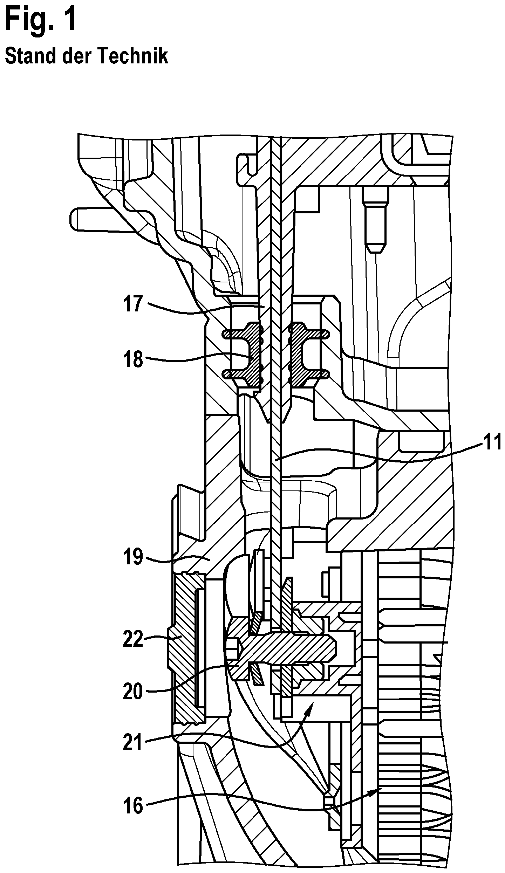

Fig. 1 zeigt eine Schnittansicht durch eine Steckervorrichtung in einem Elektrofahrzeug gemäß dem Stand der Technik. Konkret zeigt Fig. 1 eine Steckverbindung zwischen einem Elektromotor 16 (Stator) und einem Inverter 17. Der Inverter 17 weist eine Leiterschiene 11 (Busbar) auf, die über eine Schraube 20 mit einem Verbindungsanschluss 21 des Elektromotors 16 verbunden ist. An der Zuführung der Leiterschiene 11 in ein Gehäuse 19 des Elektromotors 16 ist eine Dichtung 18 zum Abdichten des Gehäuses 19 angeordnet.

Das Gehäuse 19 des Elektromotors 16 weist ferner eine Öffnung auf, um einen Zugang zur Schraube 20 bereitzustellen, damit die Schraube befestigt bzw. gelöst werden kann. Diese Öffnung ist durch einen Abdichtpfropfen 22 verschlossen.

Als zusätzliche Sicherheitseinrichtung weist das Gehäuse 19 eine Verriegelung (Interlock auf), die einen Betrieb des Elektromotors 16 bzw. des Inverters 17 verhindert, solange das Gehäuse 19 geöffnet ist.

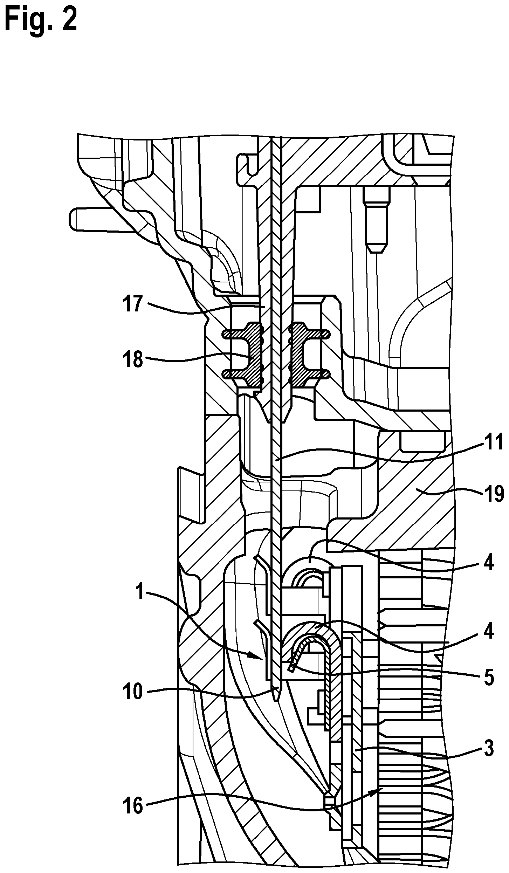

Fig. 2 zeigt eine Schnittansicht durch eine Steckervorrichtung 1 in einem Elektrofahrzeug gemäß einem ersten Ausführungsbeispiel. Ähnlich wie in Fig. 1 sind ein Inverter 17 mit Leiterschiene 11 und ein Elektromotor 16 mit einem Gehäuse 19 in einem Elektrofahrzeug dargestellt. Die Steckervorrichtung 1 verbindet den Inverter 17 mit dem Elektromotor 16. Der Inverter 17 weist drei Ausgänge mit entsprechenden Leiterschienen 11 für drei Phasen auf, von denen in der Darstellung der Fig. 2 jedoch nur eine zu sehen ist. Die Leiterschienen 11 weisen an ihrem unteren Ende jeweils einen Steckerpin 10 auf. Um ein Einstecken des Steckerpins 10 zu erleichtern ist eine Spitze des Steckerpins 10 abgerundet.

Die Steckervorrichtung 1 umfasst einen Grundkörper 3, auf dem nebeneinander drei Kontaktzungen 4 zum Verbinden des Elektromotors 16 mit dem Inverter 17 angeordnet sind. In der Schnittansicht der Fig. 2 sind nur zwei Kontaktzungen 4 zu sehen. Die Kontaktzungen 4 haben im Schnitt die Form eines auf dem Kopf stehenden Buchstabens "J". Ein gebogener Schenkel der Kontaktzungen 4 dient jeweils zum Einklemmen der Steckerpins 10 des Inverters 17. Ein gerader Abschnitt der Kontaktzungen 4 dient zum Befestigen der Kontaktzungen 4 am Grundkörper 3.

Unter den Kontaktzungen 4 sind jeweils Federelemente 5 angeordnet, die ähnlich wie die Kontaktzungen 4 jeweils einen geraden Abschnitt zum Befestigen am Grundkörper 3 bzw. auf der Kontaktzunge 4 und einen gebogenen Abschnitt aufweisen. Der gebogene Abschnitt ist so ausgebildet, dass er eine Federwirkung der Kontaktzunge 4 verstärkt. Gegenüber dem gebogenen Abschnitt weist das Federelement 5 einen gebogenen zweiten Schenkel auf, welcher dem ersten Schenkel der Kontaktzunge 4 gegenüberliegt, um den Steckerpin 10 wie dargestellt dazwischen einzuklemmen.

Die dargestellte Ausführung der Steckervorrichtung 1 benötigt im Vergleich zum Stand der Technik der Fig. 1 keine Schraube zum Befestigen des Steckerpins 10. Somit ist auch keine Öffnung im Gehäuse 19 als Zugang zur Schraube nötig. Daher kann auch auf ein Interlock verzichtet werden. Folglich kann die passive Sicherheit in Bezug auf Hochspannung verbessert werden. Ferner können durch das Einsparen von Komponenten Komplexität, Kosten und Gewicht reduziert werden.

Die Steckverbindung zwischen der Steckervorrichtung 1 und den Steckerpins 10 des Inverters 17 erlaubt eine hohe Flexibilität, da Positionsabweichungen zwischen Inverter 17 und Elektromotor 16 kompensiert werden können. Mit anderen Worten, die Klemmverbindung zwischen Kontaktzungen 4 und Steckerpins 10 hat eine hohe Toleranz bezüglich Abweichungen der Position in Längs- und Querrichtung, also entlang der Längsrichtung der Leiterschiene 11 des Inverters 17 und in einer Richtung senkrecht dazu.

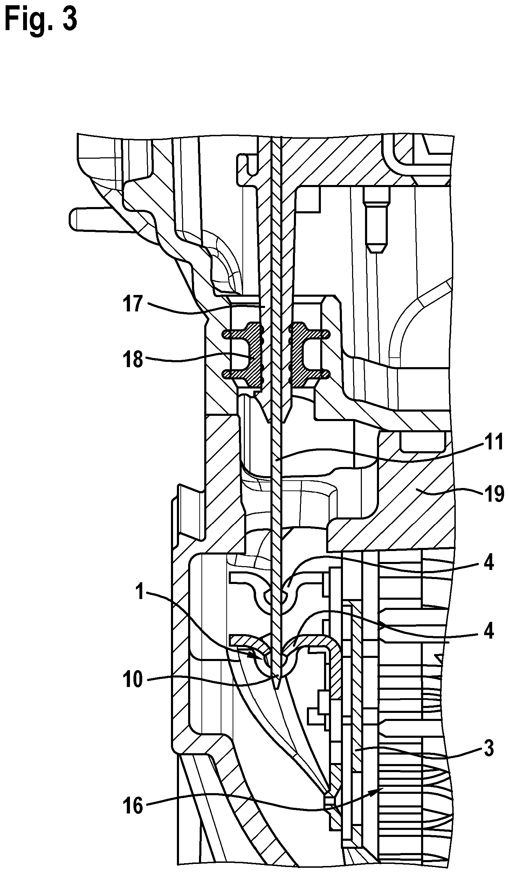

Fig. 3 zeigt eine Schnittansicht durch eine Steckervorrichtung 1 in einem Elektrofahrzeug gemäß einem zweiten Ausführungsbeispiel. Auf eine erneute Beschreibung identischer Komponenten wird verzichtet.

Die Steckervorrichtung 1 des zweiten Ausführungsbeispiels ist eine Weiterentwicklung der Steckervorrichtung 1 des ersten Ausführungsbeispiels. Hier kann auf die zusätzlichen Federelemente 5 verzichtet werden, in dem das Gegenstück der Klemmung (zweiter Schenkel) in die Kontaktzunge 4 integriert wurde. Die Einzelheiten werden im Folgenden näher beschrieben. Durch das Weglassen der Federelemente 5 können Komplexität und Kosten weiter reduziert werden.

Wie in Fig. 3 zu erkennen ist, weist der gebogene erste Schenkel der Kontaktzungen 4 nun im Wesentlichen die Form eines "U" auf. Eine Öffnung im U erlaubt das Durchstecken des Steckerpins 10. Zwei gegenüberliegende Klemmnasen, die über eine Federkraft gegeneinander vorgespannt sind, wird der Steckerpin 10 eingeklemmt. An den Schenkeln des U ausgebildete Wiederhaken erschweren zudem ein Herausziehen des Steckerpins 10, so dass eine stabile und sichere Steckverbindung hergestellt werden kann.

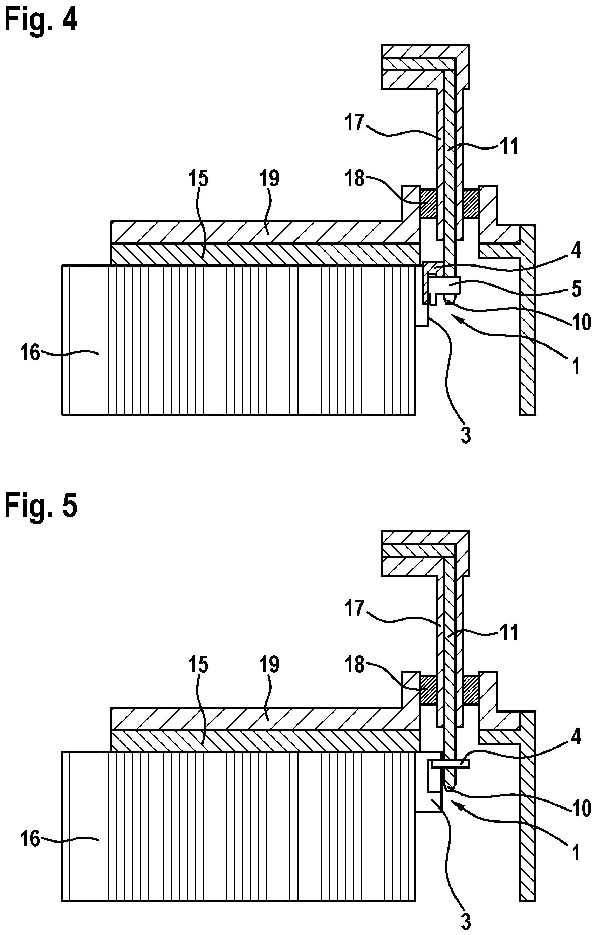

Fig. 4 zeigt eine schematische Darstellung der Steckervorrichtung gemäß dem ersten Ausführungsbeispiel. Fig. 4 entspricht im Wesentlichen der Fig. 2, wobei die Darstellung stark vereinfacht ist, um einen Überblick über die Komponenten zu geben. Der Elektromotor 16 ist in einem eigenen Gehäuse 15 angeordnet, welches in einem äußeren Gehäuse 19 angeordnet ist. Im äußeren Gehäuse 19 ist die Dichtung 18 zum Durchführen der Leiterschiene 11 des Inverters 17 angeordnet.

Innerhalb des Gehäuses 15 ist die Steckervorrichtung 1 angeordnet. Eine Schraubverbindung der Steckervorrichtung 1 wie in Fig. 1 ist hier nicht vorgesehen. Die Steckervorrichtung 1 wird durch direktes Verbinden mit einer Leitung des Elektromotors 16 befestigt. Ferner wird der Steckerpin 10 der Leiterschiene 11 mit der Steckervorrichtung 1 verbunden. Fig. 4 zeigt auch das Federelement 5, welches die Klemmwirkung der Kontaktzunge 4 verstärkt.

Fig. 5 zeigt eine schematische Darstellung der Steckervorrichtung gemäß dem zweiten Ausführungsbeispiel. Die Steckervorrichtung 1 gemäß dem zweiten Ausführungsbeispiel unterscheidet sich im Wesentlichen nur durch das Weglassen des Federelements 5 und die entsprechend geänderte Ausgestaltung der Kontaktzungen 4.

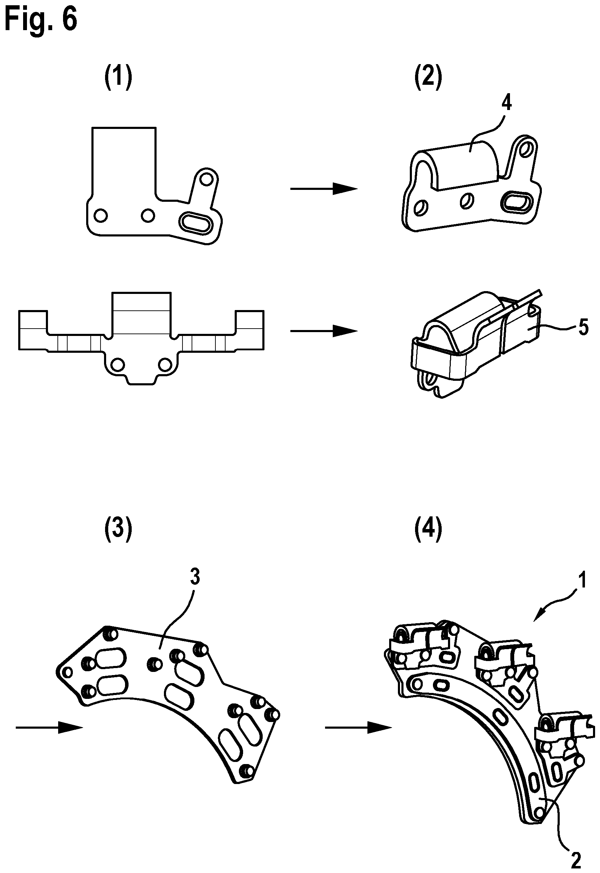

Fig. 6 illustriert ein Verfahren zum Herstellen der Steckervorrichtung 1 gemäß dem ersten Ausführungsbeispiel. In einem ersten Schritt (1) werden ein gestanztes einstückiges Metallblech z.B. aus Kupfer oder Kupferlegierung für die Kontaktzunge 4 und ein gestanztes einstückiges Metallblech, z.B. aus Edelstahl für das Federelement 5 bereitgestellt. In den Metallblechen sind jeweils Löcher zum Befestigen am Grundkörper 3 ausgebildet. Eine ovale Öffnung im Metallblech für die Kontaktzunge 4 dient später zum Befestigen einer zweiten Leitung (vom E-Motor). Diese ovale Öffnung kann zudem eine Schweißtasche zum Verschweißen mit der zweiten Leitung aufweisen.

In Schritt (2) werden die Metallbleche jeweils gebogen. Beim Biegen des Metallblechs für die Kontaktzunge 4 wird ein gebogener erster Schenkel ausgebildet, so dass die Kontaktzunge im Querschnitt die Form eines umgedrehten J erhält.

Das Metallblech für das Federelement 5 weist im Wesentlichen zwei äußere Arme auf, die zu einer Klammer zusammengefaltet bzw. gebogen werden, so dass ein gebogener zweiter Schenkel entsteht. Ferner wird ein zunächst flacher rechteckiger Abschnitt in einer Richtung senkrecht zu den Armen gebogen, um einen gebogenen Abschnitt herzustellen, der zum Erhöhen der Federkraft der Kontaktzunge 4 dient.

Die Bohrungen im Federelement 5 entsprechen denen der Kontaktzunge 4, so dass das Federelement 5 über der Kontaktzunge am Grundträger 3 befestigt werden kann.

In Schritt (3) wird der Grundträger 3 bereitgestellt. Dieser kann z.B. in einem Spritzgussverfahren aus einem elektrisch isolierenden Kunststoff hergestellt werden. Der Grundträger 3 weist eine Vielzahl von Öffnungen zum Durchführen zweiter Leitungen auf. Ferner sind am Grundträger eine Vielzahl von Stanznasen als Vorsprünge ausgebildet, um Kontaktzungen 4 und Federelemente 5 daran zu befestigen. Die Positionen der Stanznasen entsprechen den kreisrunden Bohrungen in den Kontaktzungen 4 bzw. Federelementen 5.

In Schritt (4) werden letztlich drei Kontaktzungen 4 am Grundkörper 3 befestigt. Hierbei wird vorzugsweise ein Heißprägeverfahren verwendet. Das in (4) der Fig. 6 gezeigte Ergebnis ist die Steckervorrichtung 1 gemäß dem ersten Ausführungsbeispiel. Die gezeigte Steckervorrichtung 1 weist neben den drei Kontaktzungen 4 noch eine bogenförmige, flache, geprägte Leiterschiene 2 auf, die beispielsweise als negative Anschlussklemme des Elektromotors 16 dient. Durch die bogenförmige Ausgestaltung kann die Leiterschiene 2 die Stabilität der Steckervorrichtung 1 erhöhen.

Die Positionen der drei Kontaktzungen 4 auf dem Grundkörper 3 können gemäß einer Anordnung entsprechender Leiterschienen eines anzuschließenden Inverters oder sonstigen Bauteils gewählt werden.

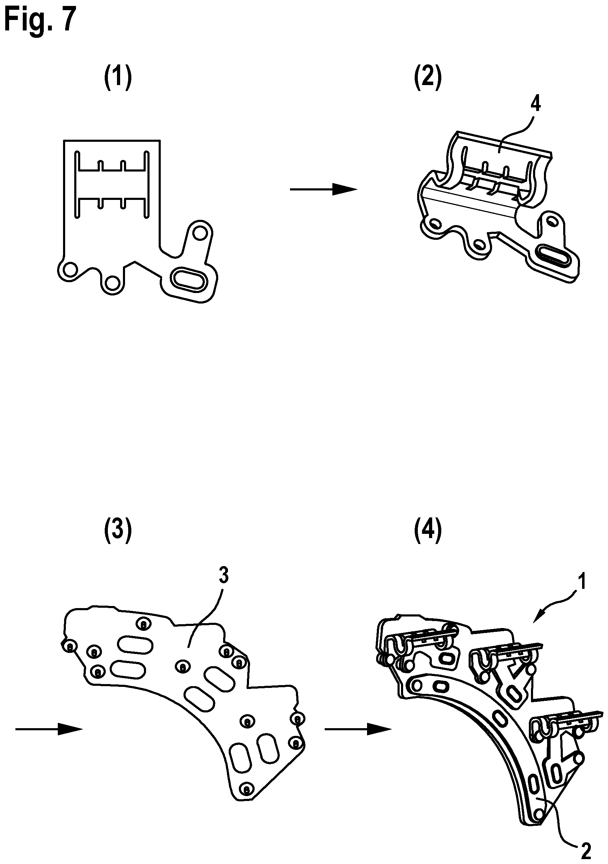

Fig. 7 illustriert ein Verfahren zum Herstellen der Steckervorrichtung 1 gemäß dem zweiten Ausführungsbeispiel. Das Verfahren ähnelt dem zuvor beschriebenen Verfahren der Fig. 6, wobei hier kein Federelement 5 verwendet wird. Stattdessen weise die Kontaktzunge 4 in Schritt (1) eine abgewandelte Form mit einer rechteckigen Öffnung und gegenüberliegenden Klemmeinrichtungen auf, welche im zweiten Schritt (2) so gebogen bzw. gefaltet wird, dass die fertige gebogene Kontaktzunge 4 auf zwei einander gegenüberliegenden Seiten der Öffnung jeweils gebogene Schenkel zum Einklemmen des Steckerpins 10 aufweist.

Die beiden gebogenen Schenkel können jeweils ausgehend von der Öffnung Einschnitte aufweisen. Eine Tiefe und eine Anzahl der Einschnitte kann die Federkraft der gebogenen Schenkel bestimmen. Ferner können durch geeignete Prägeverfahren Wiederhaken an den Kanten der Öffnung ausgebildet werden. Schritt (3) und (4) erfolgen ähnlich wie im ersten Ausführungsbeispiel der Fig. 6, so dass im Ergebnis die Steckervorrichtung 1 gemäß dem zweiten Ausführungsbeispiel fertiggestellt wird.

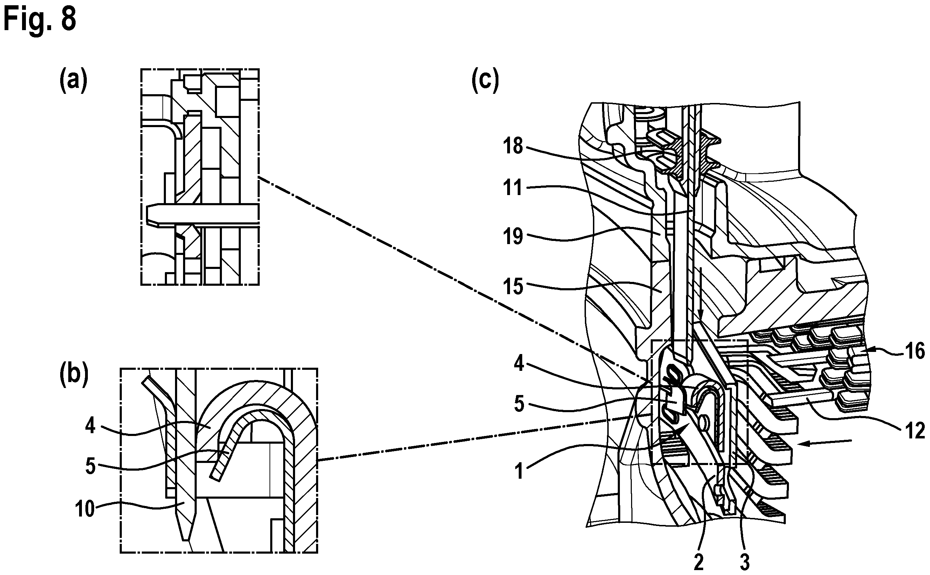

Fig. 8 illustriert ein Verfahren zum Verbinden eines Inverters 17 mit einem Elektromotor 16 unter Verwendung der Steckervorrichtung 1 gemäß dem ersten Ausführungsbeispiel. Fig. 8 ist im Wesentlichen eine perspektivische Ansicht ähnlich wie Fig. 2, wobei in Detailansichten die Verbindung zwischen der Steckervorrichtung 1 und dem Inverter 17 bzw. dem Elektromotor 16 dargestellt sind.

In einem ersten Schritt wird eine Steckervorrichtung 1 gemäß dem ersten Ausführungsbeispiel durch ein Schweißverfahren, vorzugsweise LaserSchweißen, mit dem Elektromotor 16 verbunden. Hierbei werden vorzugweise drei Anschlüsse der Statorwicklungen des E-Motors 16 mit den drei Kontaktzungen 4 verschweißt. Hierzu wird jeweils ein Ende einer Statorwicklung als zweite Leitung 12 durch die ovale Öffnung einer Kontaktzunge 4 geführt, wie in der Detailansicht (a) dargestellt ist. Eine an der Öffnung der Kontaktzunge 4 vorgesehene Schweißtasche kann den Schweißvorgang unterstützen. Ferner kann hier eine Klemmwirkung bereitgestellt werden, um dadurch die Steckervorrichtung1 vorläufig am zweiten Leiter 12 zu halten. Entlang der Längsachse des zweiten Leiters 12 (Anschluss zur Statorwicklung) wird somit eine Toleranz in der Relativposition erreicht.

Dieser Vorgang wird für alle drei Phasenanschlüsse des Stators und alle drei entsprechenden Kontaktzungen 4 wiederholt.

Anschließend kann der Stator des E-Motors 16 mit der bereits angeschweißten Steckervorrichtung 1 im Gehäuse 15 untergebracht werden. Dann kann das Gehäuse 15 des E-Motors 16 im äußeren Gehäuse 19 untergebracht werden. Der genaue Ablauf kann hierbei je nach Produkt und Hersteller etwas unterschiedlich ablaufen.

Zuletzt kann die Verbindung zwischen Inverter 17 und E-Motor 16 einfach durch Durchführen der Leiterschienen 11 (erste Leitungen) und Einstecken der jeweiligen Steckerpins 10 in die entsprechenden Kontaktzungen 4 hergestellt werden, was durch den senkrecht nach unten zeigenden Pfeil in Ansicht (c) angedeutet wird. Dabei wird auch die Dichtung 18 in eine dafür im Gehäuse 19 vorgesehene Öffnung einführt.

Diese Steckverbindung erlaubt eine hohe Toleranz in der relativen Position der Bauteile. So kann z.B. eine Toleranz in der Höhe durch die Einstecktiefe der Steckerpins 10 in die Kontaktzungen 4 erreicht werden. Ferner wird eine Toleranz in einer dazu senkrechten Richtung durch eine Breite der Kontaktzungen 4 erreicht. Außerdem kann eine relativ große Winkelabweichung erlaubt werden.

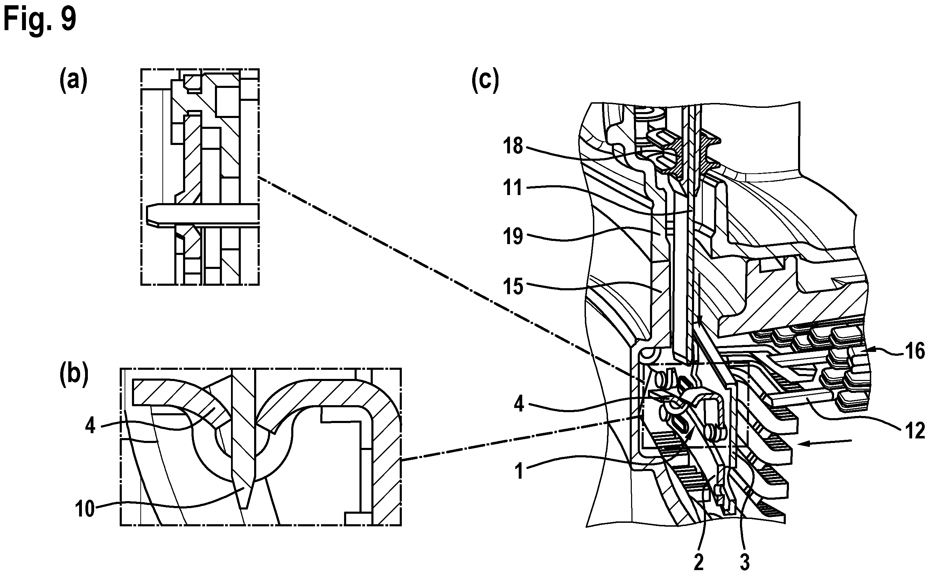

Fig. 9 illustriert ein Verfahren zum Verbinden eines Inverters 17 mit einem Elektromotor 16 unter Verwendung der Steckervorrichtung 1 gemäß dem zweiten Ausführungsbeispiel.

Der Ablauf des Verfahrens der Fig. 9 verläuft analog zum Verfahren der Fig. 8 weshalb hier auf eine erneute Beschreibung verzichtet wird.

In der vorliegenden Erfindung wurden mehrere Merkmale mit der Bezeichnung "erste/r" und "zweite/r" versehen. Diese Bezeichnungen dienen nur der verständlichen Abgrenzung der einzelnen Merkmale. Insbesondere soll sich daraus keine räumliche oder funktionelle Anordnung oder Priorisierung ableiten.

Wenn in der vorliegenden Anmeldung eine Auflistung von Alternativen mit der Bezeichnung "oder" versehen ist, soll darunter verstanden werden, dass sowohl die aufgelisteten Alternativen jeweils für sich allein genommen aber auch, falls sinnvoll, eine Kombination mehrerer oder aller aufgelisteten Alternativen verstanden werden sollen.

## Patentansprüche

1. Steckervorrichtung (1) zum elektrischen Verbinden einer ersten Leitung (11) und einer zweiten Leitung (12), umfassend:
einen Grundkörper (3); und
eine auf dem Grundkörper (3) angeordnete Kontaktzunge (4) zum elektrischen Verbinden mit der zweiten Leitung (12);
die Kontaktzunge (4) ausgebildet ist, einen mit der ersten Leitung (11) verbundenen Steckerpin (10) einzuklemmen, um eine mechanische und
elektrische Verbindung zwischen Kontaktzunge (4) und Steckerpin (10) herzustellen.

2. Steckervorrichtung (1) nach Anspruch 1, wobei die Kontaktzunge (4) ein einstückig gestanztes Metallblech ist, das einen gebogenen ersten Schenkel aufweist.

3. Steckervorrichtung (1) nach Anspruch 1 oder 2, ferner umfassend:
ein auf dem Grundkörper (3) angeordnetes Federelement (5), das mit der Kontaktzunge (4) zusammenwirkt, um eine Klemmwirkung der Kontaktzunge (4) zum Einklemmen des Steckerpins (10) zu verstärken.

4. Steckervorrichtung (1) nach Anspruch 3, wobei
das Federelement (5) ein einstückig gestanztes Metallblech ist, das einen gebogenen zweiten Schenkel aufweist, und
der erste Schenkel der Kontaktzunge (4) dem zweiten Schenkel des Federelements (5) gegenüberliegt, um den Steckerpin (10) dazwischen einzuklemmen.

5. Steckervorrichtung (1) nach Anspruch 2, wobei die Kontaktzunge (4) eine Öffnung zum Durchführen des Steckerpins (10) aufweist, und
die Kontaktzunge (4) auf zwei einander gegenüberliegenden Seiten der Öffnung jeweils gebogene Schenkel zum Einklemmen des Steckerpins (10) aufweist.

6. Steckervorrichtung (1) nach einem der vorhergehenden Ansprüche, wobei
drei oder mehr Kontaktzungen (4) auf dem Grundkörper (3) angeordnet sind.

7. Verfahren zum Fertigen einer Steckervorrichtung (1) mit den Schritten:
Bereitstellen eines Grundkörpers (3);
Fertigen einer Kontaktzunge (4) durch Stanzen und Prägen eines einstückigen Metallblechs und Biegen eines Abschnitts des Metallblechs zu einem ersten Schenkel; und
Anordnen der Kontaktzunge (4) auf dem Grundkörper (3) und
Durchführen eines Heißprägeverfahrens zum Befestigen der Kontaktzunge (4) am Grundkörper (3).

8. Verfahren nach Anspruch 7, ferner umfassend:
Fertigen eines Federelements (5) durch Stanzen und Prägen eines einstückigen Metallblechs und Biegen eines Abschnitts des Metallblechs zu einem zweiten Schenkel; und
Anordnen des Federelements (5) auf der Kontaktzunge (4) und
Durchführen eines Heißprägeverfahrens zum Befestigen des Federelements (5) am Grundkörper (3).

9. Fahrzeugbaugruppe, umfassend eine Hochspannungs-Steckervorrichtung (1) nach einem der Ansprüche 1 bis 6 zum Herstellen einer Steckverbindung zwischen einem Inverter (17), der mit der ersten Leitung (11) elektrisch verbunden ist und einem Elektromotor (16), der mit der zweiten Leitung (12) elektrisch verbunden ist.
